# EUROPÄISCHE PATENTSCHRIFT

(11) **EP 2 286 708 B1**
(45) Veröffentlichungstag und Bekanntmachung des Hinweises auf die Patenterteilung: **07.08.2013**
(21) Anmeldenummer: 10014533.3
(22) Anmeldetag: 12.11.2010
(51) Int. Cl.: A47L 15/42, A47L 15/48

(54) **Geschirrspüler mit Sorptionsmedium und zumindest teilweise getrennten Kondensations- und Trockenkreisläufen**
Dishwasher with sorption medium and at least partially separated condensation and drying cycles
Lave-vaisselle doté d'un support de sorption et de circuits de condensation et de séchage au moins partiellement divisés

(43) Veröffentlichungstag der Anmeldung: 23.02.2011
(73) Patentinhaber: V-Zug AG, CH-6301 Zug (CH)
(72) Erfinder: Maier-Laxhuber, Peter, 85276 Pfaffenhofen (DE); Schmidt, Ralf, 85354 Freising (DE); Gisler, Jürg, 6105 Schachen (CH); Dober, Ernst, 6036 Dierikon (CH); Loichinger, Albert Johann, 8135 Langnau am Albis (CH); Rother, Janine, 8045 Zürich (CH)
(74) Vertreter: Sutter, Kurt

(56) Entgegenhaltungen:
- WO-A1-02/03002
- DE-A1- 3 626 887
- DE-U1-202008 011 159

## Beschreibung

### Gebiet der Erfindung

Die Erfindung betrifft einen Geschirrspüler mit einem reversibel dehydrierbaren Sorptionsmedium, mit welchem Wasser unter Wärmeabgabe sorbierbar und unter Heizen desorbierbar ist, sowie ein Verfahren zum Betrieb eines solchen Geschirrspülers.

### Hintergrund

Sorptionsmedien der genannten Art, beispielsweise in Form von Zeolith, können in Geschirrspülern dazu eingesetzt werden, der Prozessluft während der Trocknung des Geschirrs Feuchtigkeit zu entziehen (Sorptionsphase). Zu diesem Zweck ist ein Luftkreislauf vorgesehen, um die Luft während der Trocknung des Geschirrs zwischen dem Bottich und dem Sorptionsmedium zirkulieren zu lassen (Trockenkreislauf). Bei der Sorption der Feuchtigkeit im Sorptionsmedium wird Wärme frei, welche den Trocknungsprozess des Geschirrs unterstützt. Um das Sorptionsmedium zu regenerieren, d.h. um die während der Trocknung sorbierte Feuchtigkeit wieder aus dem Sorptionsmedium zu desorbieren, ist eine Heizung vorgesehen, mit welcher das Sorptionsmedium erwärmt werden kann.

Ein derartiges Gerät wird z.B. in DE 20 2008 011 159 U beschrieben. Um dem Sorptionsmedium die sorbierte Feuchtigkeit zu entziehen (Regenerierung des Sorptionsmediums, Desorptionsphase) wird z.B. zu Beginn eines Reinigungsprozesses Prozessluft durch den Trockenkreislauf umgewälzt. Vor Eintritt in das Sorptionsmedium wird diese Prozessluft geheizt, und mit der heissen Luft wird dem Sorptionsmedium Wasser entzogen. Die aus dem Sorptionsmedium austretende, immer noch warme, feuchte Luft gelangt zurück in den kühleren Bottich, wo die Feuchtigkeit mindestens teilweise auskondensiert.

Die DE 36 26 887 A1 offenbart ein Wäschebehandlungsgerät, bei dem sich während des Betriebes mit Feuchtigkeit angereicherte Luft bildet, der dann in einer Entfeuchtungseinrichtung die Feuchtigkeit entzogen wird durch die Verwendung eines adsorptiven Trocknungsmittels. Das adsorptive Trocknungsmittel ist in einem Behälter angeordnet, der an das Leitungssystem des Gerätes derart anschliessbar ist, dass über ihn wechselweise der Entfeuchtungsluftstrom und der Regenerationsluftstrom geführt werden kann. Dabei wird dem Regenerationsluftstrom oder direkt dem Trocknungsmittel über eine geeignete Heizvorrichtung Wärme zugeführt.

Eine Waschautomat-Trockner-Kombination aus der WO 02/03002 A1 weist eine Trommel auf, durch die ein Luftstrom geführt werden kann. Das Gerät weist weiterhin ein Desorptionssystem auf. Während eines Trockungsbetriebs wird die in der Trommel mit Feuchte beaufschlagte Luft über das Desorptionssystem geführt, wodurch der Luft die Feuchte wieder entzogen wird. Während eines Waschbetriebs wird das Desorptionsmedium durch Heizen dehydriert, wobei die Luft innerhalb eines geschlossenen Kreislaufes ausserhalb der Trommel zirkuliert.

### Darstellung der Erfindung

Vor dem dargestellten Hintergrund stellt sich die Aufgabe, einen Geschirrspüler sowie ein Verfahren zu dessen Betrieb bereitzustellen, mit denen eine hohe Prozesseffizienz, kurze Prozessdauern und sparsamer Energieverbrauch erreicht werden können.

Diese Aufgabe wird vom erfindungsgemässen Geschirrspüler und vom Verfahren gemäss den unabhängigen Ansprüchen gelöst.

Erfindungsgemäss ist der Geschirrspüler dazu ausgestaltet, in der Sorptionsphase Luft zwischen dem Bottich und dem Sorptionsmedium zirkulieren zu lassen, um auf diese Weise Feuchtigkeit aus dem Bottich auszutragen. Hierzu ist, wie bei bekannten Lösungen, mindestens ein Trockenkreislauf vorgesehen, in welchem zum Trocknen des Spülguts Luft zwischen Bottich und Sorptionsmedium umgewälzt werden kann. Erfindungsgemäss wird dieser Trockenkreislauf jedoch nicht oder zumindest nur teilweise zur Desorption der Feuchtigkeit aus dem Sorptionsmedium, d.h. zur Regenerierung des Sorptionsmediums, eingesetzt. Stattdessen ist zu diesem Zweck neben dem Trockenkreislauf mindestens ein zusätzlicher Kondensationskreislauf vorhanden. Der Geschirrspüler ist nun dazu ausgestaltet, das Sorptionsmedium in der Desorptionsphase zu heizen und über den Kondensationskreislauf Gas, insbesondere Luft, durch das Sorptionsmedium zu pumpen oder mittels freier Konvektion um zuwälzen. Auf diese Weise kann die während der Sorptionsphase sorbierte Feuchtigkeit wieder aus dem Sorptionsmedium entfernt werden. Indem erfindungsgemäss nicht, wie bei bekannten Lösungen, durch den Bottich zirkulierende Luft aus dem Trockenkreislauf, sondern Gas in einem zusätzlichen Kondensationskreislauf für die Desorption der Feuchte aus dem Sorptionsmedium verwendet wird, kann die zur effizienten Desorption benötigte Temperatur im Sorptionsmedium schneller erreicht werden, da vorzugsweise nicht das gesamte Luftvolumen im Bottichinnenraum und somit auch das Bottichmaterial selbst und das Geschirr mitgeheizt werden müssen.

Vorzugsweise ist der erfindungsgemässe Kondensationskreislauf deshalb derart ausgestaltet, dass er einen im Wesentlichen geschlossenen Gaskreislauf innerhalb des Geschirrspülers darstellt. Zur Entfernung der Feuchtigkeit aus dem Gas im Kondensationskreislauf ist vorzugsweise eine Kondensatöffnung im Kondensationskreislauf vorgesehen. Diese Kondensatöffnung ist derart ausgestaltet, dass sie aufgrund ihrer Dimensionierung und Positionierung im Kreislauf den Gasfluss nicht wesentlich beeinflusst und eine effiziente Entfernung von Kondensat aus dem Kondensationskreislauf ermöglicht.

Der Kondensationskreislauf ist zumindest auf einem Teilstück seines Verlaufs thermisch mit einem kühleren Bauteil im Geschirrspüler gekoppelt, z.B. mit einer Oberfläche des Bottichs, einer Wasserzuführungsleitung oder mindestens einem Wasserkreislauf. Aufgrund eines Temperaturgefälles kommt es dann im Bereich der thermischen Kopplung zu einer vermehrten Auskondensation von Feuchtigkeit aus dem heissen Gas im Kondensationskreislauf. Entstehende Kondensationswärme kann somit zumindest teilweise auf das kühlere Bauteil übertragen werden und dient zur Energieeinsparung. Das entstehende Kondenswasser kann vorzugsweise über die Kondensatöffnung in den Bottich oder einen Wasserkreislauf im Geschirrspüler übertragen werden.

### Kurze Beschreibung der Zeichnungen

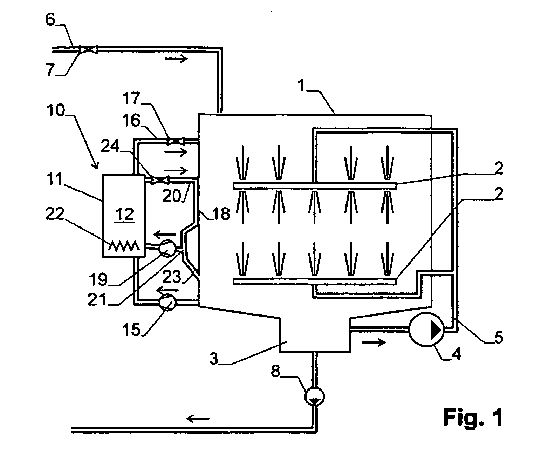

Weitere Ausgestaltungen, Vorteile und Anwendungen der Erfindung ergeben sich aus den abhängigen Ansprüchen und aus der Beschreibung anhand der Figuren. Dabei zeigt die Fig. 1 eine mögliche Ausführung eines Geschirrspülers mit zumindest teilweise getrennten Kondensations- und Trockenkreisläufen.

### Wege zur Ausführung der Erfindung

Der in Fig. 1 dargestellte Geschirrspüler besitzt einen Bottich 1 zur Aufnahme des Spülguts. Hierzu sind im Bottich 1 in bekannter Weise Geschirrkörbe vorgesehen (nicht gezeigt). Im Bottich 1 sind weiterhin z.B. zwei drehbare Sprüharme 2 angeordnet, mit denen Prozesswasser in den Bottich 1 eingebracht werden kann. Um Prozesswasser aus dem Sumpf 3 des Bottichs 1 zu den Sprüharmen 2 zu fördern, ist eine Zirkulationspumpe 4 vorgesehen, welche das Prozesswasser durch eine Zirkulationsleitung 5 fördert. Weiterhin umfasst der Geschirrspüler nach Fig. 1 eine Frischwasserzufuhr 6, von welcher dem Gerät über ein Ventil 7 und eine nicht eingezeichnete, optionale Wasseraufbereitungseinrichtung (Enthärtung) Frischwasser zugeführt werden kann. Eine Ablaufpumpe 8 führt verbrauchtes Prozesswasser in die Kanalisation ab.

Das vorliegende Gerät besitzt einen Sorptionstrockner 10. Der Sorptionstrockner 10 kann z.B. im Sockelraum, an der Bottichrückwand, an einer Bottichseitenwand oder in der Türe des Geschirrspülers angeordnet sein, oder aber ausserhalb des Geschirrspülers in einem Nebenfach. Er weist eine Sorptionskammer 11 auf, in welcher ein Sorptionsmedium 12 angeordnet ist. Unter Sorptionsmedium ist dabei ein Material zu verstehen, mit welchem in einem reversiblen Prozess Wasser unter Wärmeabgabe sorbierbar und unter Wärmezuführung (Heizen) desorbierbar ist. Vorzugsweise besteht das Sorptionsmedium mindestens teilweise aus Zeolith.

Weiter besitzt das Gerät einen Trockenkreislauf umfassend einen Trockenluftventilator 15 und eine Rückführleitung 16 mit einem Rückführventil 17. Sind während der Sorptionsphase der Trockenluftventilator 15 in Betrieb und das Ventil 17 geöffnet (Ventil 24 ist dabei geschlossen zu halten), so wird Prozessluft aus dem Bottich 1 in das Sorptionsmedium 12 geführt und gelangt über die Rückführleitung 16 und das Rückführventil 17 wieder zurück in den Bottich 1. Somit wird ein geschlossener Kreislauf gebildet.

Eine Heizung 22 dient dazu, das Sorptionsmedium 12 zu erwärmen und somit die Desorption von Wasser aus dem Sorptionsmedium (zur dessen Regeneration) zu ermöglichen. Die Heizung 22 befindet sich vorzugsweise im Sorptionsmedium, und zwar dort, wo die Zufuhrleitung eines unten beschriebenen, zusätzlich zum Trockenkreislauf vorhandenen Kondensationskreislaufs in die Sorptionskammer 11 mündet. Die Heizung 22 kann allerdings auch ausserhalb des Sorptionsmediums 12 angeordnet werden, z.B. in der Zufuhrleitung des Kondensationskreislaufs selbst.

Zusätzlich zum beschriebenen Trockenkreislauf besitzt der erfindungsgemässe Geschirrspüler zur effizienten Regeneration des Sorptionsmediums einen zumindest in Teilsegmenten vom Trockenkreislauf getrennten Kondensationskreislauf, bestehend aus einem Kondensationsluftventilator 19 und einer Leitung 20 mit einem Ventil 24. Sind während der Desorptionsphase der Kondensationsluftventilator 19 in Betrieb und das Ventil 24 geöffnet (dabei ist das Rückführventil 17 des Trockenkreislaufs geschlossen zu halten), so wird Gas, insbesondere Luft, durch das Sorptionsmedium 12 gepumpt und gelangt durch die Leitung 20 wieder zurück in den Kondensationskreislauf. Statt mit dem Kondensationsluftventilator 19 ist auch eine Gasumwälzung im Kondensationskreislauf mittels freier Konvektion denkbar, da das Sorptionsmedium 12 durch die Heizung 22 während der Desorptionsphase auf hohe Temperaturen erhitzt wird.

In einer vorzugsweise umgesetzten Implementierung der Erfindung ist der Kondensationskreislauf derart ausgestaltet, dass er einen im Wesentlichen geschlossenen Gaskreislauf innerhalb des Geschirrspülers darstellt. Eine geeignet positionierte und dimensionierte Öffnung in diesem geschlossenen Gaskreislauf, z.B. zur Extraktion von Feuchtigkeit, beeinflusst dabei den Gasfluss und somit die Geschlossenheit des Kreislaufs nicht. Ein solcher geschlossener Kreislauf mit begrenztem Gasvolumen hat den Vorteil, dass die benötigte Heizenergie zum Erreichen einer bestimmten Temperaturschwelle innerhalb des Sorptionsmediums gering ist. Wird der geschlossene Kondensationskreislauf nicht durch den Bottich 1 geführt, so wird die zur Desorption notwendige Temperatur schnell erreicht, ohne dass der Bottich und dessen Inhalt aufgeheizt werden müssen. Auch kann die Temperaturschwelle im Sorptionsmedium 12 höher angesetzt werden, was zu einem besseren Trocknungsgrad des Sorptionsmediums 12 führt. Ausserdem sind eine lokale Überhitzung des Inneren des Bottichs 1 und dadurch resultierende Beschädigungen während der Desorptionsphase ebenfalls ausgeschlossen.

Vorzugsweise weist der Kondensationskreislauf eine Kondensatöffnung 21 zur Entfernung von kondensiertem Wasser aus dem Kreislauf während oder nach der Desorptionsphase auf. Würde die Feuchtigkeit nicht zeitnah nach dem Abschalten der Heizung 22 aus dem Prozessgas des Kondensationskreislaufs extrahiert, so wäre eine unerwünschte, allmähliche Resorption des Wassers in das Sorptionsmedium 12 unvermeidlich. Die Dimensionierung und Positionierung der Kondensatöffnung 21 im Kondensationskreislauf ist dabei derart ausgestaltet, dass einerseits im Fall eines geschlossenen Kondensationskreislaufs der Gasfluss und somit der geschlossene Kreislauf nicht beeinträchtigt werden und andererseits eine effiziente Extraktion von Kondenswasser ermöglicht wird. Die Extraktion kann aktiv durch Pumpen oder passiv durch Abfliessen erfolgen. Das entstehende Kondenswasser aus dem Kondensationskreislauf kann in einem Sammelbehälter aufgefangen werden oder es wird vorzugsweise in den Bottich 1 oder einen Wasserkreislauf des Geschirrspülers abgeführt, so dass das Wasser und dessen Wärmeinhalt im Spülprozess genutzt werden können. Dazu kann eine optionale Kondensatabführung 23 als Verbindung zwischen Kondensatöffnung 21 und Bottich 1 bzw. Wasserkreislauf zum Einsatz kommen.

Zur effizienten Entfernung von Feuchtigkeit aus dem Prozessgas im Kondensationskreislauf während oder nach der Desorptionsphase kann der Kondensationskreislauf vorzugsweise so ausgestaltet sein, dass er zumindest auf einem Teilsegment seines Verlaufs einen direkten thermischen Kontakt zum einem kühleren Bauteil des Geschirrspülers, z.B. dem Bottich 1, der Wasserzuführung 6 oder dem Zirkulationswasserkreislauf 4, 5 aufweist. Aufgrund des Temperaturgefälles zwischen dem während der Desorptionsphase heissen Prozessgas im Kondensationskreislauf einerseits und dem thermisch kontaktierten, im Vergleich dazu kühleren Bauteil andererseits kommt es im kontaktierten Bereich des Kondensationskreislaufs zu einer vermehrten Kondensation von Wasserdampf in der Leitung 20. Das entstehende Wasser kann dann gesammelt und aus dem Kondensationskreislauf extrahiert werden. Zur Effizienzsteigerung können geeignete Wärmetauscher eingesetzt werden. Die bei der Kondensation freiwerdende Wärme kann dazu verwendet werden, den Bottich 1 vorzuwärmen.

Der beschriebene direkte thermische Kontakt des Kondensationskreislaufs zum Bottich 1 kann vorzugsweise dadurch hergestellt werden, dass zumindest ein Teilsegment der Leitung 20 des Kondensationskreislaufs an der Oberfläche des Bottichs 1 anliegt und ihr folgt. Durch das Anliegen zumindest eines Teilsegments der Leitung 20 an der Oberfläche des Bottichs 1 wird ein thermischer Kontakt zwischen dem Bottich 1 und der Leitung 20 hergestellt. Im kontaktierten Teilsegment der Leitung 20 ist somit mit einer vermehrten Kondensation von Wasserdampf während der Desorptionsphase zu rechnen. Die Form des Leitungsquerschnitts der Leitung 20 kann zur Effizienzsteigerung der thermischen Kopplung zumindest in einem Teil des kontaktierten Segments angepasst werden, indem sie beispielsweise abgeplattet oder in mehrere Teilleitungen aufgespaltet wird (Wärmetauscher). Weiterhin ist der Einsatz von Vorrichtungen zur Steigerung der thermischen Kontaktierung denkbar, z.B. die lokale Applikation von Wärmeleitpaste oder die Verwendung von Wärmetauscherrippen.

Vorzugsweise kann der beschriebene direkte thermische Kontakt eines Teilsegments der Leitung 20 des Kondensationskreislaufs mit dem Bottich 1 auch in einer geeigneten Anordnung mit der Kondensatöffnung 21 kombiniert werden. In einer solchen Implementierung kondensiert während der Desorptionsphase Wasserdampf vermehrt in dem am Bottich anliegenden Segment der Leitung 20 im Kondensationskreislauf und fliesst danach über die geeignet positionierte Kondensatöffnung 21 und die optionale Kondensatabführung 23 in den Bottich 1 ab. Als Vorteile ergeben sich einerseits eine Wasserersparnis und andererseits eine Übertragung eines Teils der Wärmeenergie aus dem Kondensationskreislauf auf den Bottich und somit auf den folgenden Spülprozess (durch Kondensationswärme und Warmwasserabfluss in den Bottich).

Ein Reinigungsprozess für Spülgut kann beim Gerät nach Fig. 1 z.B. in folgenden Schritten ablaufen:
- Ein Menge an Frischwasser wird über die Frischwasserzufuhr 6 und das Ventil 7 in den Bottich 1 gefüllt. Die Menge ist so bemessen, dass sie bis auf eine Restmenge einem vollständigen Badinhalt für die im Folgenden erwähnte Spülphase entspricht.
- Das Wasser im Bottich 1 wird über die Zirkulationspumpe 4 sporadisch und/oder selektiv (d.h. jeweils nur durch einen Sprüharm) umgewälzt, damit in dieser Phase einerseits Schmutz am Geschirr eingeweicht wird und andererseits die Wärme in der Sorptionskammer 11 möglichst hoch bleibt.
- Die Heizung 22 wird in Betrieb genommen, womit die Desorptionsphase beginnt. Während dieser Desorptionsphase verbleibt das Wasser, das vorher dem Bottich zugeführt worden ist, im Bottich. Vorzugsweise wird am Anfang der Desorptionsphase noch kein Gas durch das Sorptionsmedium 12 geführt, d.h. der Kondensationsluftventilator 19 bleibt ausgeschaltet. Erst wenn die Temperatur im Sorptionsmedium eine vorgegebene Temperaturschwelle erreicht hat, welche für eine effiziente Desorption ausreicht, wird der Kondensationsluftventilator 19 eingeschaltet und Gas durch das Sorptionsmedium 12 gepumpt. Die Temperaturschwelle liegt im Bereich von 150 - 350 °C, vorzugsweise bei ca. 220 °C. Nun wird die Wärme auf das ganze Sorptionsmedium verteilt und das Gas nimmt die aus dem Sorptionsmedium 12 austretende Feuchtigkeit auf. Das Ventil 24 muss dabei nun geöffnet sein, das Rückführventil 17 muss geschlossen sein (während dem vorangehenden Heizen konnten beide Ventile geöffnet oder geschlossen sein). Das Umwälzen des Wassers im Bottich 1 über die Zirkulationspumpe 4 kann während der beschriebenen Desorptionsphase weitergeführt werden, falls das Gas im Kondensationskreislauf nicht durch den Bottich 1 geführt wird. Nach der Aufnahme von Wasserdampf im heissen Sorptionsmedium 12 tritt das noch warme Gas im Kondensationskreislauf durch Ventil 24 und Leitung 20 in das Segment der Leitung 20 ein, welches im thermischen Kontakt zu einer kühleren Baugruppe des Geschirrspülers steht, z.B. der Oberfläche 18 des Bottichs 1. Aufgrund des Temperaturgefälles kondensiert in diesem Bereich vermehrt Wasserdampf an der Innenseite der Leitung 20, das entstehende Kondenswasser kann nun über die Kondensatöffnung 21 und die Kondensatabführung 23 z.B. in den Bottich 1 abgeführt werden. Damit werden Kondensationswärme und Warmwasser in den Bottich 1 übertragen. Im Folgenden wird das nun trockenere Gas wieder vom Kondensationsluftventilator 19 durch das Sorptionsmedium 12 gepumpt und der Kondensationskreislauf ist somit geschlossen.
- Sobald das Sorptionsmedium 12 trocken ist, z.B. nach ca. 2 - 10 Minuten, werden der Kondensationsluftventilator 19 abgeschaltet und das Ventil 24 geschlossen. Es ist allerdings auch denkbar, dass das Ventil 24 für eine gewisse Zeit geöffnet bleibt und der Kondensationsluftventilator 19 in dieser Zeit in Betrieb bleibt, um das Sorptionsmedium 12 zu kühlen und dessen Restwärme zum Bottich 1 zu transferieren. Zu diesem Zweck wäre auch eine Wasserkühlung der Sorptionskammer 11 möglich, z.B. durch einen nicht in Fig. 1 eingezeichneten Wasserbehälter, welcher die Sorptionskammer 11 im Wesentlichen allseitig umschliesst und welcher einen Wasseraustausch mit dem Bottich 1 ermöglicht.
- Spätestens jetzt oder bereits während der beschriebenen Desorptionsphase beginnt der eigentliche Spülprozess des Geschirrs. Falls nötig, kann hierbei die Temperatur des Wassers im Bottich 1 mit einer nicht in Fig. 1 eingezeichneten zweiten Heizung, welche z.B. an der Zirkulationsleitung 5 oder der Zirkulationspumpe 4 angeordnet ist, noch weiter erwärmt werden.
- Nach dem Spülprozess wird das Wasser aus dem Bottich 1 abgelassen. Danach wird in einer Klarspülphase ein zusätzliches Wasserbad eingespeist, um das Geschirr auf eine bestimmte Temperatur zu erhitzen, z.B. 40°C, und um Glanzmittel an die Oberflächen des Geschirrs zu bringen.
- Danach beginnt die Trocknungsphase. Rückführventil 17 wird geöffnet, Ventil 24 ist geschlossen und der Trockenluftventilator 15 wird in Betrieb genommen, so dass die Luft im Trockenkreislauf durch das Sorptionsmedium getrocknet und erwärmt wird. Dabei handelt es sich um einen geschlossenen Luftkreislauf, bei welchem die Luft aus dem Bottich 1 in das Sorptionsmedium 12 und von dort wieder zurück in den Bottich 1 gefördert wird.

Dabei nimmt die Luft im Bottich 1 Feuchte vom Geschirr auf, und diese Feuchte wird im Sorptionsmedium 12 sorbiert, wobei gleichzeitig Wärme frei wird, welche die Wasseraufnahmefähigkeit der Luft erhöht und die Trocknung des Geschirrs unterstützt. Vorzugsweise wird während der Trocknungsphase ein grösserer Luftstrom durch das Sorptionsmedium 12 gepumpt als während der Desorptionsphase.

Bemerkungen:
Die verschiedenen Schritte des hier beschriebenen Betriebsverfahrens werden über eine Steuereinheit geregelt (nicht gezeigt). Diese enthält z.B. einen Mikroprozessor, der so programmiert ist, dass er die beschriebenen Schritte selbsttätig durchführt. Wenn in den Ansprüchen erwähnt wird, dass der Geschirrspüler zur Durchführung gewisser Schritte "ausgestaltet ist", so ist dies so zu verstehen, dass die Steuereinheit des Geräts so strukturiert ist, dass sie die Schritte selbsttätig durchführt.

Trockenkreislauf und Kondensationskreislauf können derart ausgestaltet sein, dass sie nur in Teilsegmenten ausserhalb des Sorptionsmediums 12 getrennt sind, z.B. über Mehrwegeventile (Luftzirkulation durch den Bottich 1 im Fall des Trockenkreislaufs bzw. z.B. durch eine Leitung ausserhalb des Bottichs 1 im Fall des Kondensationskreislaufs). In diesem Fall können Trockenluftventilator 15 und Kondensationsluftventilator 19 identisch sein. Auch in diesem Fall ist der Kondensationskreislauf als ein zusätzlicher Kreislauf zum Trockenkreislauf zu verstehen.

Die Kondensatöffnung 21 mit der anschliessenden Kondensatabführung 23 kann gasdicht, dabei jedoch flüssigkeitsdurchlässig ausgestaltet sein, beispielsweise mittels eines S-förmigen Rohres (Siphons).

Während in der vorliegenden Anmeldung bevorzugte Ausführungen der Erfindung beschrieben sind, ist klar darauf hinzuweisen, dass die Erfindung nicht auf diese beschränkt ist und auch in anderer Weise innerhalb des Umfangs der folgenden Ansprüche ausgeführt werden kann.

## Patentansprüche

1. Geschirrspüler mit
mindestens einem Bottich (1) zur Aufnahme des Spülguts,
einem reversibel dehydrierbaren Sorptionsmedium (12), mit welchem Wasser unter Wärmeabgabe sorbierbar und unter Heizen desorbierbar ist,
mindestens einer Heizung (22) zur Regeneration des Sorptionsmediums (12),
mindestens einem Trockenkreislauf (15, 16, 17) zur Trocknung des Spülguts im Bottich (1), wobei der Geschirrspüler Mittel aufweist, um während einer Sorptionsphase Luft im Trockenkreislauf (15, 16, 17) zwischen dem Bottich (1) und dem Sorptionsmedium (12) zur Entfernung von Feuchtigkeit aus dem Bottich (1) zirkulieren zu lassen,
**dadurch gekennzeichnet, dass** der Geschirrspüler zusätzlich zum Trockenkreislauf mindestens einen zumindest in Teilsegmenten vom Trockenkreislauf (15, 16, 17) getrennten Kondensationskreislauf (19, 20, 24) zur Regeneration des Sorptionsmediums (12) aufweist und dass der Geschirrspüler dazu ausgestaltet ist, während einer Desorptionsphase das Sorptionsmedium (12) mit der Heizung (22) zu heizen und Mittel aufweist, um ein Gas im Kondensationskreislauf (19, 20, 24) durch das Sorptionsmedium (12) zur Entfernung von Feuchtigkeit aus dem Sorptionsmedium (12) zu pumpen oder mittels freier Konvektion im Kondensationskreislauf (19, 20, 24) umzuwälzen,
wobei der Kondensationskreislauf (19, 20, 24) derart ausgestaltet ist, dass er zumindest auf einem Teilsegment seines Verlaufs einen direkten thermischen Kontakt zum Bottich (1), zu einer Wasserzuführung (6) des Geschirrspülers oder zu mindestens einem Wasserkreislauf des Geschirrspülers aufweist.

2. Geschirrspüler nach Anspruch 1, wobei der Kondensationskreislauf (19, 20, 24) derart ausgestaltet ist, dass er einen im Wesentlichen geschlossenen Gaskreislauf innerhalb des Geschirrspülers darstellt.

3. Geschirrspüler nach einem der Ansprüche 1 oder 2, wobei der Kondensationskreislauf (19, 20, 24) eine Kondensatöffnung (21) zur Entfernung von Feuchtigkeit aus dem Kondensationskreislauf aufweist.

4. Geschirrspüler nach Anspruch 3, wobei die Kondensatöffnung (21) des Kondensationskreislaufs (19, 20, 24) mit dem Bottich (1) oder einem Wasserkreislauf des Geschirrspülers verbunden ist zum Zweck der Abführung von Kondenswasser aus dem Kondensationskreislauf.

5. Geschirrspüler nach Anspruch 1, wobei der Kondensationskreislauf (19, 20, 24) derart ausgestaltet ist, dass er zumindest auf einem Teilstück seines Verlaufs einer Oberfläche (18) des Bottichs (1) folgt zum Zweck einer direkten thermischen Kopplung zwischen dem Kondensationskreislauf (19, 20, 24) und dem Bottich (1).

6. Geschirrspüler nach den Ansprüchen 4 und 5, wobei der Geschirrspüler derart ausgestaltet ist, dass während der Desorptionsphase aus dem im Kondensationskreislauf (19, 20, 24) zirkulierenden Gas in dem der Oberfläche (18) des Bottichs (1) folgenden Teilstück des Kondensationskreislaufs Wasserdampf auskondensiert und das entstehende Wasser über die Kondensatöffnung (21) in den Bottich (1) abfliest.

7. Verfahren zum Betrieb des Geschirrspülers nach einem der vorangehenden Ansprüche, wobei Verfahrensschritte ausgeführt werden, dass
- ein Geschirrspülers nach einem der vorangehenden Ansprüche mit einem Trockenkreislauf (15, 16, 17) und mindestens einem zumindest in Teilsegmenten vom Trockenkreislauf (15, 16, 17) getrennten Kondensationskreislauf (19, 20, 24) bereitgestellt wird, wobei der Kondensationskreislauf (19, 20, 24) zumindest auf einem Teilsegment seines Verlaufs einen direkten thermischen Kontakt zum Bottich (1), zu einer Wasserzuführung (6) des Geschirrspülers oder zu mindestens einem Wasserkreislauf des Geschirrspülers aufweist,
- in einer Sorptionsphase Luft zwischen dem Bottich (1) und dem Sorptionsmedium (12) durch den Trockenkreislauf (15, 16, 17) umgewälzt wird und dem Bottich (1) Feuchtigkeit entzogen wird, und
- in einer Desorptionsphase dem Sorptionsmedium (12) Wärme zugeführt wird und Gas im Kondensationskreislauf (19, 20, 24) mittels freier Konvektion umgewälzt oder durch das Sorptionsmedium (12) gepumpt wird und dem Sorptionsmedium (12) Feuchtigkeit entzogen wird, wobei aufgrund eines Temperaturgefälles im Bereich der thermischen Kopplung Feuchtigkeit aus dem erwärmten Gas im Kondensationskreislauf vermehrt auskondensiert.

8. Verfahren nach Anspruch 7, wobei das in der Desorptionsphase im Kondensationskreislauf (19, 20, 24) kondensierende Wasser dem Bottich (1) zugeführt wird.

9. Verfahren nach einem der Ansprüche 7 oder 8, wobei zu Beginn der Desorptionsphase bei eingeschalteter Heizung (22) noch keine Luft durch den Kondensationskreislauf (19, 20, 24) und somit durch das Sorptionsmedium (12) gepumpt wird, sondern erst nach Erreichen einer bestimmten Temperaturschwelle im Sorptionsmedium (12).

10. Verfahren nach einem der Ansprüche 7 bis 9, wobei die während der Desorptionsphase dem Sorptionsmedium 12 zugeführte Wärme zumindest teilweise an den Bottich (1) oder einen Wasserkreislauf des Geschirrspülers übertragen wird.

## Claims

1. Dishwasher with
at least one tub (1) for receiving the washing goods,
a reversibly dehydratable sorption medium (12) with which water is sorbable under heat emission and desorbable under heating,
at least one heater (22) for regeneration of the sorption medium (12),
at least one drying circuit (15, 16, 17) for drying the washing goods in the tub (1), wherein said dishwasher comprises means for, during a sorption phase, circulating air in the drying circuit (15, 16, 17) between the tub (1) and the sorption medium (12) for removal of moisture from the tub (1),
**characterized in that** the dishwasher in addition to the drying circuit comprises at least one condensation circuit (19, 20, 24) which is at least in partial segments separate from the drying circuit (15, 16, 17) for regeneration of the sorption medium (12) and **in that** the dishwasher is structured to heat, during a desorption phase, the sorption medium (12) with the heater (22) and it comprises means for pumping or for circulating, by means of free convection, a gas in the condensation circuit (19, 20, 24) through the sorption medium (12) for removal of moisture from the sorption medium (12),
wherein the condensation circuit (19, 20, 24) is structured such that it has, at least on a partial segment of its path, a direct thermal contact to the tub (1), to a water supply (6) of the dishwasher, or to at least one water circuit of the dishwasher.

2. Dishwasher of claim 1 wherein the condensation circuit (19, 20, 24) is structured such that it constitutes an essentially closed gas circuit in the dishwasher.

3. Dishwasher of any of the claims 1 or 2
wherein the condensation circuit (19, 20, 24) comprises a condensate opening (21) for removal of moisture from the condensation circuit.

4. Dishwasher of claim 3 wherein the condensate opening (21) of the condensation circuit (19, 20, 24) is connected with the tub (1) or a water circuit of the dishwasher for the purpose of discharging condensed water from the condensation circuit.

5. Dishwasher of claim 1 wherein the condensation circuit (19, 20, 24) is structured such that it follows at least on a partial segment of its path a surface (18) of the tub (1) for the purpose of a direct thermal coupling between the condensation circuit (19, 20, 24) and the tub (1).

6. Dishwasher of the claims 4 and 5 wherein the dishwasher is structured such that during the desorption phase water vapor condenses out of the circulating gas in the condensation circuit (19, 20, 24) in the partial segment of the condensation circuit which follows the surface (18) of the tub (1) and that the resulting water runs off over the condensate opening (21) into the tub (1).

7. Method for operating the dishwasher of any of the preceding claims, wherein method steps are executed that
- a dishwasher of any of the preceding claims is provided with a drying circuit (15, 16, 17) and at least one, at least in partial segments from the drying circuit (15, 16, 17) separate, condensation circuit (19, 20, 24), wherein the condensation circuit (19, 20, 24) has, at least on a partial segment of its path, a direct thermal contact to the tub (1), to a water supply (6) of the dishwasher, or to at least one water circuit of the dishwasher,
- in a sorption phase air is circulated in the drying circuit (15, 16, 17) between the tub (1) and the sorption medium (12) and moisture is removed from the tub (1), and
- in a desorption phase heat is applied to the sorption medium (12) and gas is circulated in the condensation circuit (19, 20, 24) by means of free convection or pumped through the sorption medium (12) and moisture is removed from the sorption medium (12), wherein moisture condenses out increasedly from the heated gas in the condensation circuit due to a temperature gradient in the region of the thermal coupling.

8. Method of claim 7 wherein in the desorption phase the condensing water in the condensation circuit (19, 20, 24) is fed into the tub (1).

9. Method of any of the claims 7 or 8 wherein at a beginning of the desorption phase with an activated heater (22) no air is pumped through the condensation circuit yet (19, 20, 24) and therefore through the sorption medium (12), but only after reaching a given temperature threshold in the sorption medium (12).

10. Method of any of the claims 7 to 9
wherein the heat that is applied to the sorption medium (12) during the desorption phase is at least in part transferred to the tub (1) or to a water circuit of the dishwasher.

## Revendications

1. Lave-vaisselle équipé
d'au moins une cuve (1) pour recevoir les produits à laver,
d'un matériau de sorption (12) déshydrogénable de manière réversible avec lequel de l'eau peut subir une sorption par dégagement de chaleur et une désorption par apport de chaleur,
d'au moins un chauffage (22) servant à la régénération du matériau de sorption (12),
d'au moins un circuit de séchage (15, 16, 17) servant au séchage du produit à laver dans la cuve (1), dans lequel le lave-vaisselle comprend des moyens pour, durant une phase de sorption, faire circuler de l'air dans le circuit de séchage (15, 16, 17) entre la cuve (1) et le matériau de sorption (12) afin d'éliminer l'humidité de la cuve (1),
**caractérisé en ce que** le lave-vaisselle comporte, en plus du circuit de séchage, au moins un circuit de condensation (19, 20, 24) qui est séparé par le circuit de séchage (15, 16, 17) au moins en des segments partiels et qui sert à la régénération du matériau de sorption (12) et **en ce que** le lave-vaisselle est agencé pour chauffer le matériau de sorption (12) avec le chauffage (22) durant une phase de désorption et comporte des moyens pour pomper un gaz dans le circuit de condensation (19, 20, 24) à travers le matériau de sorption (12) afin d'éliminer l'humidité du matériau de sorption (12) ou faire circuler le gaz dans le circuit de condensation (19, 20, 24) au moyen d'une convection libre,
dans lequel le circuit de condensation (19, 20, 24) est agencé de manière telle qu'il comporte au moins sur un segment partiel de son parcours un contact thermique direct avec la cuve (1), avec une amenée d'eau (6) du lave-vaisselle ou avec au moins un circuit d'eau du lave-vaisselle.

2. Lave-vaisselle selon la revendication 1, dans lequel le circuit de condensation (19, 20, 24) est agencé de manière telle qu'il représente un circuit de gaz sensiblement fermé à l'intérieur du lave-vaisselle.

3. Lave-vaisselle selon l'une quelconque des revendications 1 ou 2, dans lequel le circuit de condensation (19, 20, 24) comporte une ouverture pour condensats (21) servant à éliminer l'humidité du circuit de condensation.

4. Lave-vaisselle selon la revendication 3, dans lequel l'ouverture pour condensats (21) du circuit de condensation (19, 20, 24) est reliée à la cuve (1) ou à un circuit d'eau du lave-vaisselle dans le but d'évacuer l'eau de condensation du circuit de condensation.

5. Lave-vaisselle selon la revendication 1, dans lequel le circuit de condensation (19, 20, 24) est agencé de manière telle qu'il suive sur au moins une partie de son parcours une surface (18) de la cuve (1) aux fins d'un couplage thermique direct entre le circuit de condensation (19, 20, 24) et la cuve (1).

6. Lave-vaisselle selon les revendications 4 et 5, dans lequel le lave-vaisselle est agencé de manière telle que, durant la phase de désorption, de la vapeur d'eau soit éliminée par condensation du gaz circulant dans le circuit de condensation (19, 20, 24) dans la partie du circuit de condensation suivant la surface (18) de la cuve (1) et que l'eau produite s'écoule dans la cuve (1) par le biais de l'ouverture pour condensats (21).

7. Procédé de fonctionnement du lave-vaisselle selon l'une quelconque des revendications précédentes, dans lequel sont exécutées des étapes du procédé au cours desquelles
- on dispose d'un lave-vaisselle selon l'une quelconque des revendications précédentes équipé d'un circuit de séchage (15, 16, 17) et d'au moins un circuit de condensation (19, 20, 24) séparé au moins en des segments partiels par le circuit de séchage (15, 16, 17), dans lequel le circuit de condensation (19, 20, 24) comporte au moins sur un segment partiel de son parcours un contact thermique direct avec la cuve (1), avec une amenée d'eau (6) du lave-vaisselle ou avec au moins un circuit d'eau du lave-vaisselle,
- au cours d'une phase de sorption, de l'air est mis en circulation à travers le circuit de séchage (15, 16, 17) entre la cuve (1) et le matériau de sorption (12) et l'humidité est retirée de la cuve (1), et
- au cours d'une phase de désorption, de la chaleur est amenée au matériau de sorption (12) et du gaz est mis en circulation dans le circuit de condensation (19, 20, 24) au moyen d'une convection libre ou est pompé à travers le matériau de sorption (12) et l'humidité est retirée du matériau de sorption (12), dans lequel, en raison d'un gradient de température dans la zone du couplage thermique, l'humidité est éliminée davantage du gaz réchauffé, par condensation dans le circuit de condensation,

8. Procédé selon la revendication 7, dans lequel, au cours de la phase de désorption, l'eau se condensant dans le circuit de condensation (19, 20, 24) est amenée dans la cuve (1).

9. Procédé selon l'une quelconque des revendications 7 ou 8, dans lequel, le chauffage (22) étant en marche, de l'air n'est pas pompé à travers le circuit de condensation (19, 20, 24) et donc pas non plus à travers le matériau de sorption (12) au début de la phase de désorption, mais au contraire seulement après qu'un seuil de température a été atteint dans le matériau de sorption (12).

10. Procédé selon l'une quelconque des revendications 7 à 9, dans lequel la chaleur amenée au matériau de sorption 12 durant la phase de désorption est transmise au moins en partie à la cuve (1) ou à un circuit d'eau du lave-vaisselle.
